Europäisches Patentamt

European Patent Office

Office européen des brevets

(19)

(11) Veröffentlichungsnummer: 0 044 043

A1

(12) **EUROPÄISCHE PATENTANMELDUNG**

(21) Anmeldenummer: 81105353.7

(22) Anmeldetag: 09.07.81

(51) Int. Cl.³: **B 29 H 17/00**

(30) Priorität: 10.07.80 DE 3026240

(43) Veröffentlichungstag der Anmeldung:
20.01.82 Patentblatt 82/3

(84) Benannte Vertragsstaaten:
AT BE CH FR GB IT LI LU NL SE

(71) Anmelder: Willmerding, Günter
Hirtenweg 3
D-8084 Inning(DE)

(72) Erfinder: Willmerding, Günter, Dr.
Hirtenweg 3
D-8084 Inning(DE)

(72) Erfinder: Kempter, Michael
Degenfeldstrasse 10
D-8000 München 40(DE)

(54) Verfahren zum Giessen von Reifen und Form zur Durchführung eines solchen Verfahrens.

(57) Die Erfindung betrifft ein Verfahren zum Gießen von Reifen aus einem gießfähigen Elastomer in einer geschlossenen Form (10), bei dem eine Membran (22) expandiert und anschließend unter Kontraktion der Membran (22) eine dem herzustellenden Reifen entsprechende Menge Elastomer in den Formhohlraum eingefüllt wird, wobei die Membran (22) auf ein den Formhohlraum weitgehend ausfüllendes Volumen expandiert, über einen ersten Kanal (28) an einer die Lauffläche bildenden Stelle der Form (10) das Elastomer für die Lauffläche unter teilweiser Kontraktion der Membran (22) im Bereich der Lauffläche eingefüllt und nach der zumindest teilweisen Aushärtung des Elastomers für die Lauffläche über mindestens einen zweiten Kanal (30, 32) im Bereich der Seitenwand das Elastomer für die Karkasse eingefüllt wird.

EP 0 044 043 A1

Croydon Printing Company Ltd.

Dr. WILLMERDING, Günter

0044043

München, den 7.7.1981
MK 120 P 80 EP

Verfahren zum Gießen von Reifen und Form zur Durchführung eines solchen Verfahrens

Die Erfindung betrifft ein Verfahren zum Gießen von Reifen der im Oberbegriff des Anspruchs 1 angegebenen Gattung sowie eine Form zur Durchführung eines solchen Verfahrens.

Als gegossenes Elastomer werden die unter der Bezeichnung "Polyurethane" bekannten Umsetzungsprodukte verwendet, die sich aus der Reaktion von Polyisocyanaten mit Polyester-, Polyätherpolyolen und/oder -Polyaminen und telechelics, die mehr als eine Amino- oder Hydroxyl-Gruppe oder beides tragen, sowie mit Verbindungen niederen Molekulargewichtes mit Zeretwinoaktivem Wasserstoff ergeben. Im folgenden sollen diese Verbindung nur noch als "Polyurethane" bezeichnet werden, obwohl es sich streng genommen nicht um reine Polymere der Urethan-Gruppe handelt.

Ein Verfahren der angegebenen Gattung und eine Form zur Durchführung eines solchen Verfahrens werden in der DE-OS 2 826 340 beschrieben, wobei jedoch der Formhohlraum in einem Schuß mit dem Polyurethan gefüllt wird, so daß zwangsläufig für den gesamten Reifen eine homogene Polyurethanmasse verwendet wird.

Bei der weiteren Entwicklung von Polyurethan-Reifen hat sich jedoch herausgestellt, daß die Verwendung eines einzigen Polyurethans zur Herstellung des gesamten Reifens nur eine Kompromißlösung darstellt, da an die Lauffläche einerseits und die Karkasse andererseits sehr unterschiedliche Anforderungen gestellt werden, die von einem einzigen Polyurethan nicht optimal erfüllt werden.

Es wird deshalb angestrebt, für die Lauffläche einerseits und die Karkasse andererseits unterschiedliche Polyurethane zu verwenden, die jeweils optimal auf die gestellten Anforderungen abgestimmt sind.

Es ist deshalb ein Ziel der vorliegenden Erfindung, ein Verfahren zum Gießen von Reifen sowie eine Form zur Durchführung dieses Verfahrens zu schaffen, bei dem bzw. der auf konstruktiv einfache Weise die Lauffläche des Reifens einerseits und seine Karkasse andererseits getrennt gegossen werden können, so daß ihre Herstellung aus verschiedenen Polyurethanen möglich wird.

Bei einem Verfahren der angegebenen Gattung wird dies dadurch erreicht, daß

a) die Membran auf ein den Formhohlraum weitgehend ausfüllendes Volumen expandiert wird, daß

b) über einen ersten Kanal an einer die Lauffläche bildenden Stelle der Form das Polyurethan für die Lauffläche unter teilweiser Kontraktion der Membran im Bereich der Lauffläche eingefüllt wird, und daß

c) nach der zumindest teilweisen Aushärtung des Polyurethans für die Lauffläche über mindestens einen zweiten Kanal im Bereich der Seitenwand das Polyurethan für die Karkasse eingefüllt wird.

Bei einer Form mit einer expandierbaren Membran zur Durchführung dieses Verfahrens wird dies erreicht durch

a) einen ersten Kanal im Bereich der Lauffläche, und durch

b) mindestens einen zweiten Kanal im Bereich der Seitenwand.

Die mit der Erfindung erzielten Vorteile beruhen auf der Ausnutzung des folgenden Effektes: Die Membran wird in der Weise expandiert, daß nur im Bereich der Lauffläche ein kleiner, restlicher Formhohlraum zurückbleibt, während die Membran im Bereich der Seitenwände an der Innenfläche der Form anliegt. Wird nun das Polyurethan für die Lauffläche in diesen kleinen Formhohlraum gegossen, so füllt es zunächst diesen Formhohlraum aus, der gleichzeitig über eine am höchsten Punkt der Form vorgesehene Öffnung entlüftet wird.

Wenn dieser Formhohlraum durch das Polyurethan für die Lauffläche gefüllt und die Entlüftungsöffnung verschlossen ist, wird die Membran bei der weiteren Einfüllung des Polyurethans für die Lauffläche so lange zusammengedrückt, bis die gesamte Lauffläche gegossen worden ist.

Wie man mit membrantheoretischen Überlegungen erklären kann, führt jedoch diese Kontraktion der Membran im Bereich der Lauffläche bzw. im Bereich der Seitenwände zu Kräften, welche die Membran nach außen drücken und praktisch in fluiddichte Anlage an die Seitenwände der Form bringen. Diese Kräfte sind so groß, daß in diesem Bereich der Form das flüssige Polyurethan nicht weiterfließen kann.

Durch entsprechende Auswahl des Materials, der Dichte und der Form der Membran, deren Außenfläche der Innenfläche des herzustellenden Reifens entspricht, können die Stellen, an denen der erwähnte Anlagedruck entsteht, so ausgewählt werden, daß bei diesem ersten Gießschritt nur die reine Lauffläche entsteht.

Beim Gießen der Lauffläche treten die beim steigenden Guß bekannten Probleme, insbesondere in bezug auf Lufteinschlüsse, auf. Hier muß durch geeignete Gestaltung der Profile die Blasenbildung auf ein Minimum reduziert werden. Gute Ergebnisse wurden mit Längsrillen-Profilen erhalten, welche die ausreichende Entlüftung dieses Bereiches gewährleisten.

Wenn das Polyurethan der Lauffläche zumindest teilweise ausgehärtet ist, wird über mindestens einen zweiten Kanal, der sich zweckmäßigerweise im Wulstbereich der Form befindet, das Polyurethan für die Karkasse eingefüllt. Dieses Polyurethan drückt die Membran von ihrer Befestigung her von beiden Seiten symmetrisch zusammen, so daß dieses Polyurethan auch in den Bereich zwischen der bereits vorhandenen Lauffläche des Reifens und der Membran gelangen kann. Dabei hängt die Zeitspanne zwischen dem Ende des Einfüllens des Polyurethans für die Lauffläche und dem Beginn des Einfüllens des Polyurethans für die Karkasse von den Reaktionseigenschaften der verwendeten Materialien ab. Diese Zeitspanne sollte so ausgelegt werden, daß sich noch eine gute Verbindung zwischen dem Polyurethan für die Lauffläche und dem Polyurethan für die Karkasse erzielen läßt.

Mit einer solchen Form können auch profilierte Laufflächen, beispielsweise Laufflächen, die mit auch für die ausreichende Entlüftung sorgenden Längsrillen versehen sind, hergestellt werden. Zu diesem Zweck muß, wie oben erwähnt wurde, die Form so aufgestellt werden, daß sich am obersten Punkt der Form eine Entlüftungsöffnung befindet, durch die die Luft aus den Profilrillen entweichen kann.

Der Kanal für die Einfüllung des Polyurethans für die Lauffläche befindet sich zweckmäßigerweise auf der dem Entlüftungskanal gegenüberliegenden Seite der Lauffläche, also an der tiefsten Stelle der Form.

Bedingt durch das auch beim Polyurethan-Reifen vorhandene, als Wulstkern dienende Kabel wird beim Expandieren der Membran ein Ringkanal gebildet. Bei der Herstellung der Karkasse kann es zu Problemen mit der in diesem Ringkanal zwangsläufig vorhandenen Luft kommen. Dies läßt sich auf einfache Weise dadurch vermeiden, daß zwei Entlüftungskanäle jeweils symmetrisch zur Mittelebene des Reifens an der höchsten Stelle des Ringkanals angeordnet sind.

Wird nun das Polyurethan für die Karkasse von dem Bereich der Seitenwände her in den Formhohlraum eingeschossen, so füllen sich zunächst die beiden Ringkanäle mit dem Polyurethan, während die vorhandene Luft über die Entlüftungskanäle nach außen strömt.

Nachdem die Luft entwichen ist und das Polyurethan die Entlüftungskanäle erreicht hat, werden diese verschlossen, so daß das weitere, einströmende Polyurethan die Membran zusammendrückt und die gekrümmte Karkasse hergestellt wird.

Die bei der erfindungsgemäßen Form vorgesehenen Entlüftungskanäle können entweder mit herkömmlichen Mitteln verschlossen oder mit einem Sammelraum verbunden sein, in dem die Luft aus dem Formhohlraum einströmt und solange komprimiert wird, bis ein weiterer Druckanstieg zur Kontraktion der Membran führt.

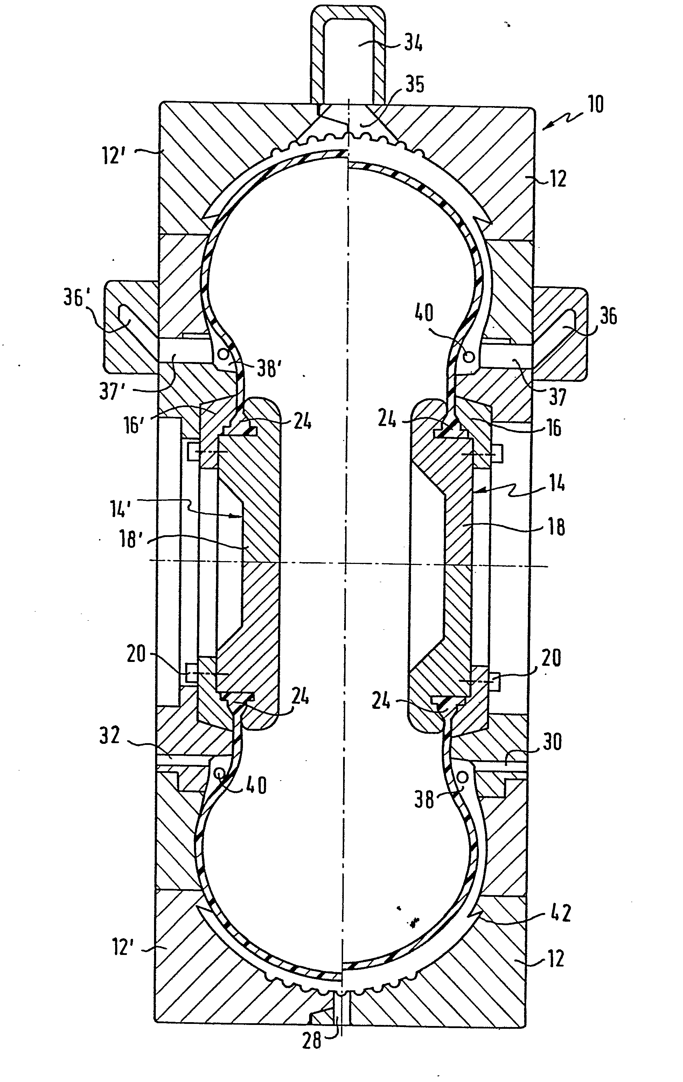

Die Erfindung wird im folgenden anhand eines Ausführungsbeispiels unter Bezugnahme auf die beiliegende, schematische Zeichnung näher erläutert, deren einzige Figur einen Schnitt durch eine Form darstellt, wobei in der linken Hälfte die Stellung der Form vor Schußbeginn und in der rechten Hälfte die Stellung der Form nach Schußende gezeigt sind. In der Arbeitslage steht die Form senkrecht, wie durch die Zusätze "unten" bzw. "oben" angedeutet ist.

Die insgesamt mit dem Bezugszeichen 10 versehene Form besteht aus zwei Teilen, und zwar einem mit den Bezugszeichen 14 und 14' versehenen, die Seitenwände überdeckenden Mittelteil und einem mit den Bezugszeichen 12 und 12' versehenen Außenteil, der die Form der Lauffläche des Reifens vorgibt.

Der Mittelteil 14, 14' weist zwei Klemmplatten 16, 18 bzw. 16', 18' auf, die über Schrauben 20 miteinander verbunden sind. Die beiden Klemmplatten 16, 18 bzw. 16' 18' enthalten eine Aussparung, in der ein entsprechend geformter Fuß 24 einer expandierbaren Membran 22 formschlüssig fixiert wird.

Diese Membran 22 besteht aus einem dünnwandigen, elastischen Material, beispielsweise Gummi oder einem Elastomer, insbesondere Polyurethan. Zweckmäßigerweise hat die Membran 22 eine Wandstärke, die bei der Verwendung von Gummi als Material für die Membran und einem Reifengewicht von 2,5 kp zwischen 4 und 12 mm liegen kann; bei Material höherer Steifigkeit muß die Wandstärke entsprechend reduziert werden.

Die Außenfläche der Membran im nicht vorgespannten Zustand entspricht der Form der Innenfläche des herzustellenden Reifens.

Diese Membran steht über eine nicht dargestellte Leitung, in der sich ein Druckregler befindet, mit einem Zylinder in Verbindung, in dem ein verschiebbarer Kolben angeordnet ist.

Einzelheiten der Expansion der Membran werden in der DE-OS 2 826 340 beschrieben und sollen hier nicht nochmals wiederholt werden.

Der Mittelteil 14, 14' der Form 10 weist einen Ringkanal 38, 38' auf, in dem beispielsweise mit Hilfe von Distanzelementen ein kabelförmiger Wulst 40 fixiert wird.

Symmetrisch zur Mittelebene des Reifens, gemäß der Darstellung der Figur also zur senkrechten Mittellinie durch die beiden äußersten Punkte der Lauffläche, sind zwei Einfüllkanäle 30, 32 vorgesehen, die in den Ringkanal 38, 38' der Form 10 münden.

Auf der in Bezug zur senkrechten Symmetrieebene diesen Einfüllkanälen 30, 32 gegenüberliegenden Seite der Form sind an der höchsten Stelle des Ringkanals 38, 38' zwei Entlüftungskanäle 37, 37' vorgesehen, die mit einem Sammelraum 36, 36' für die Luft aus dem Ringkanal verbunden sind.

An der tiefsten Stelle der Lauffläche befindet sich ein Einfüllkanal 28, während auf der diesem Einfüllkanal 28 gegenüberliegenden Seite des Reifens, also an der höchsten Stelle der Lauffläche, ein Entlüftungskanal 35 für die Luft aus dem Laufflächenprofil der Form 10 vorgesehen ist. Dieser Entlüftungskanal 35 steht mit einem weiteren Sammelraum 34 in Verbindung.

Wie man ebenfalls in der Figur erkennen kann, ist der Laufflächenbereich 12, 12' der Form im Übergangsbereich zur Seitenwand mit einer Hinterschneidung 42 versehen, deren Spitze nach außen ragt. Hierdurch wird verhindert, daß beim noch zu erläuternden Gießen der Karkasse sich das Polyurethan über die bereits gegossene Lauffläche schieben kann.

Vor Beginn eines Schusses wird die Membran 22 auf die in der DE-OS 2 826 340 im Detail erläuterten Weise so expandiert, daß sie im Bereich der Seitenwände an der Innenfläche der Form anliegt, wie man auf der linken Seite der Figur erkennen kann, während im Bereich der Lauffläche ein Formhohlraum gebildet wird, der an den beiden Seiten durch die Hinterschneidungen 42, innen durch den Luaffflächenbereich der Membran 22 und außen durch den Laufflächenbereich der Form begrenzt ist, der mit einem rillenartigen Profil versehen ist.

Nun wird über den unteren Einfüllkanal 28 das Polyurethan für die Lauffläche des Reifens eingeschossen, das zunächst die Luft aus den Profilrillen des Laufflächenbereiches 12, 12' der Form verdrängt, so daß diese Luft in dem Lauffflächen-Formhohlraum nach oben steigt, und über den Entlüftungskanal 35 nach außen in den Sammelraum 34 entweicht.

In diesem Sammelraum 35 wird die Luft so lange komprimiert, bis der Druck im Sammelraum 34 näherungsweise gleich dem Fülldruck der Membran 22 ist. Bei einer weiteren Erhöhung des Drucks in dem Sammelraum 34 durch das weitere Einfüllen des Polyurethans für die Lauffläche wird die Membran 22 im Laufflächenbereich so zusammengedrückt, daß weiteres Polyurethan in den dadurch entstehenden Raum fließen kann.

Bei dieser Verformung der Membran im Laufflächenbereich bleibt der Anlagedruck der Membran 22 an den Seitenwänden der Form erhalten, so daß dort weiterhin die Membran fluiddicht an der Innenwand der Form anliegt.

Das Polyurethan für die Lauffläche wird also auf den Laufflächenbereich des Reifens beschränkt und kann nicht bis zur Seitenwand
hin vordringen.

Die über den unteren Einfüllkanal 28 eingeschossene Polyurethanmenge ist so abgestimmt, daß nur der der Lauffläche entsprechende
Teil der Form durch dieses Polyurethan ausgefüllt wird.

Nachdem diese Polyurethanmenge eingefüllt worden ist, wird der
Gießvorgang für eine kurze Zeitspanne unterbrochen. Die Zeitspanne zwischen dem Ende des Einfüllens des Polyurethans für die
Lauffläche und dem Einschußbeginn des Polyurethans für die Karkasse hängt von den Reaktionseigenschaften der verwendeten Materialien ab. Die Zeitspanne sollte jedoch so ausgelegt sein,
daß sich noch eine gute, haftende Verbindung zwischen dem Polyurethan für die Lauffläche und dem Polyurethan für die Karkasse
ergibt.

Damit sich die Membran 22 leicht von dem ausgehärteten Polyurethan löst, wird ihre Außenfläche im allgemeinen mit einem Trennmittel beschichtet. Dieses Trennmittel muß so ausgewählt sein,
daß es die anschließende Verbindung zwischen den beiden verschiedenen Polyurethan-Typen nicht verhindert. Dies läßt sich beispielsweise dadurch erreichen, daß ein Trennmittel verwendet
wird, das nach der Ablösung der Membran von der Innenfläche der
Lauffläche nicht an diesem Polyurethan haftet. Hierfür stehen
geeignete Trennmittel zur Verfügung.

Wenn die für die Aushärtung des Polyurethans für die Lauffläche
benötigte Zeitspanne verstrichen ist, wird das Polyurethan für
die Karkasse über die Einfüllkanäle 30, 32 eingeschossen. Dabei
entweicht zunächst die Luft aus dem Ringkanal 38, 38' über die
Entlüftungskanäle 37, 37' in die Sammelräume 36, 36', bis sie
dort so weit zusammengedrückt wird, daß bei einer weiteren Erhöhung des Drucks durch das weiter eingeschossene Polyurethan die Membran 22 kontrahiert wird und somit das Polyurethan sowohl zu den Seitenwänden als auch in den Bereich zwischen der bereits gegossenen Lauffläche und der Membran 22 gelangen kann.

In diesem Bereich verbindet sich das Polyurethan für die Lauffläche mit dem neu zugeführten Polyurethan für die Karkasse, so daß praktisch ein einstückiger Körper entsteht.

Wie man auf der linken unteren Seite der Figur, in der Arbeitsstellung der Form gesehen, erkennen kann, verhindern die Hinterschneidungen 42, daß das von den Seitenwänden her vordringende Polyurethan für die Karkasse sich über das bereits ausgehärtete Polyurethan für die Lauffläche schieben kann, sondern daß stattdessen die Membran 22 nach innen gedrückt wird und deshalb das Polyurethan für die Karkasse in den dadurch entstehenden Spalt zwischen der Lauffläche und der Membran eindringt.

Wie man aus der Figur erkennt, wird die Form 10 so aufgestellt, daß sich der Entlüftungskanal 35 für die Luft in den Profilrillen der Lauffläche im obersten Punkt der Lauffläche und damit der Form befindet und die Luft über diesen Kanal austreten kann.

Als Alternative zu den in der Figur dargestellten Sammelräumen 34, 36, 36' für die aus der Form herausgedrückte Luft können die Entlüftungskanäle 35, 37, 37' auch auf herkömmliche Weise verschlossen werden, wenn die gesamte Luft aus der Form herausgedrückt worden ist.

Patentansprüche

1. Verfahren zum Gießen von Reifen aus einem gießfähigen Elastomer in einer geschlossenen Form, bei dem eine Membran expandiert
und anschließend unter Kontraktion der Membran eine dem herzustellenden Reifen entsprechende Menge Elastomer in den Formhohlraum
eingefüllt wird, d a d u r c h  g e k e n n z e i c h n e t ,
daß

    a) die Membran (22) auf ein den Formhohlraum weitgehend
       ausfüllendes Volumen expandiert wird, daß

    b) über einen ersten Kanal (28) an einer die Lauffläche
       bildenden Stelle der Form (10) das Elastomer für die
       Lauffläche unter teilweiser Kontraktion der Membran
       (22) im Bereich der Lauffläche eingefüllt wird, und
       daß

    c) nach der zumindest teilweisen Aushärtung des Elastomers
       für die Lauffläche über mindestens einen zweiten Kanal
       (30, 32) im Bereich der Seitenwand das Elastomer für
       die Karkasse eingefüllt wird.

2. Verfahren zum Gießen von Reifen nach Anspruch 1, dadurch gekennzeichnet, daß bei der Expansion der Membran (22) im Bereich
der Lauffläche ein Hohlraum gebildet wird, in den das Elastomer
für die Lauffläche eingefüllt wird, während die Membran (22) im
Bereich der Seitenwände an der Innenfläche der Form (10) anliegt.

3. Form mit einer expandierbaren Membran zur Durchführung des
Verfahrens nach einem der Ansprüche 1 oder 2, gekennzeichnet
durch

    a) einen ersten Kanal (28) im Bereich der Lauffläche,
       und durch

    b) mindestens einen zweiten Kanal (30, 32) im Bereich der
       Seitenwand.

4. Form nach Anspruch 3, dadurch gekennzeichnet, daß zwei symmetrisch zur Mittelebene des Reifens angeordnete Kanäle (30, 32) im Wulstbereich des Reifens vorgesehen sind.

5. Form nach einem der Ansprüche 3 oder 4, dadurch gekennzeichnet, daß der erste Kanal (28) im tiefsten Punkt des Laufflächenbereiches der Form (10) liegt.

6. Form nach einem der Ansprüche 3 bis 5, dadurch gekennzeichnet, daß ein Entlüftungskanal (35) für die Luft aus dem Profilbereich des Reifens im höchsten Punkt der Lauffläche vorgesehen ist.

7. Form nach einem der Ansprüche 3 bis 6, dadurch gekennzeichnet, daß mindestens ein Entlüftungskanal (37, 37') im Bereich der Seitenwand des Reifens vorgesehen ist.

8. Form nach Anspruch 7, dadurch gekennzeichnet, daß zwei symmetrisch zur Reifenmitte angeordnete Entlüftungskanäle (37, 37') im Wulstbereich des Reifens vorgesehen sind.

9. Form nach einem der Ansprüche 7 oder 8, dadurch gekennzeichnet, daß die beiden Entlüftungskanäle (37, 37') an der höchsten Stelle eines im Wulstbereich des Reifens vorgesehenen Ringkanals (38, 38') angeordnet sind.

10. Form nach einem der Ansprüche 6 bis 9, dadurch gekennzeichnet, daß die Entlüftungskanäle (35; 37, 37') verschließbar oder mit einem geschlossenen Sammelraum (34; 36, 36') verbunden sind.

11. Form nach einem der Ansprüche 3 bis 10, dadurch gekennzeichnet, daß die Innenfläche der Form im Bereich des Übergangs vom Laufflächenbereich zum Seitenwandbereich mit Hinterschneidungen (42) versehen ist, die jeweils symmetrisch zur Reifenmittelebene liegen.

**0044043**

Europäisches
Patentamt

**EUROPÄISCHER RECHERCHENBERICHT**

Nummer der Anmeldung

EP 81 10 5353

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | DE - A - 1 479 104 (DUNLOP)<br><br>* Seite 1 - Seite 8, Abschnitt 2 *<br><br>-- | 1,2,4 |
| | EP - A - 0 006 188 (METZELER)<br>* Seiten 1-10 *<br><br>-- | 1,7 |
| | DE - A - 1 916 163 (DUNLOP)<br>* Seite 6, Abschnitt 1 - Seite 7, Abschnitt 3 *<br><br>-- | 3 |
| A | DE - A - 2 249 172 (BRIDGESTONE) | |
| A | DE - A - 2 228 610 (BRIDGESTONE) | |
| A | DE - A - 2 437 888 (BRIDGESTONE)<br><br>----- | |

**KLASSIFIKATION DER ANMELDUNG (Int. Cl.³)**

B 29 H 17/00

**RECHERCHIERTE SACHGEBIETE (Int. Cl.³)**

B 29 H 17/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22.09.1981 | SCHMITT |

EPA form 1503.1  06.78